# FASCICULE DE BREVET EUROPEEN

(11) **EP 2 891 045 B1**
(45) Date de publication et mention de la délivrance du brevet: **12.07.2017**
(21) Numéro de dépôt: 13756313.6
(22) Date de dépôt: 23.08.2013
(51) Int. Cl.: G06F 3/0354, G06F 3/0488, G06F 3/0485

(54) **MODULE DE COMMANDE COMPORTANT UNE SURFACE SENSIBLE AU TOUCHER**
STEUERMODUL MIT EINER BERÜHRUNGSEMPFINDLICHEN OBERFLÄCHE
CONTROL MODULE COMPRISING A TOUCH-SENSITIVE SURFACE

(30) Priorité: 30.08.2012 FR 1258104
(43) Date de publication de la demande: 08.07.2015
(73) Titulaire: Delphi Technologies, Inc., Troy MI 48007 (US)
(72) Inventeur: MOLARD, Yannick, F-67130 Hersbach (FR); SIMON, Claude, F-67115 Plobsheim (FR)
(74) Mandataire: Delphi France SAS
(86) Numéro de dépôt international: PCT/EP2013/002545
(87) Numéro de publication internationale: WO 2014/032786

(56) Documents cités:
- EP-A1- 2 416 338
- WO-A2-2009/024971

## Description

### DOMAINE TECHNIQUE

La présente invention concerne un module de commande électronique, notamment prévu pour être agencé dans l'habitacle d'un véhicule automobile.

### ARRIERE-PLAN TECHNOLOGIQUE DE L'INVENTION

La présente invention concerne plus particulièrement un module de commande qui sert d'interface à un utilisateur pour commander et afficher différentes fonctions sur un écran d'affichage, lesdites fonctions étant liées à différents paramètres du véhicule automobile ou d'un équipement audiovidéo équipant le véhicule.

Il est connu d'utiliser des organes de commande à base de surfaces tactiles, c'est-à-dire utilisant des moyens de détection des mouvements du doigt d'un utilisateur pour commander des fonctions. Diverses solutions de détection ont déjà été proposées, en particulier des capteurs d'efforts, des capteurs résistifs ou capacitifs, etc. Les documents WO 2009/024971 A2 et EP 2416338 A1 décrivent des organes de commande avec des surfaces tactiles de différentes formes, permettant de contrôler diverses fonctions.

La présente invention vise à proposer un organe de commande pour un module de commande qui soit plus ergonomique et qui facilite la manipulation par un utilisateur, en particulier par un conducteur de véhicule.

### RESUME DE L'INVENTION

Dans ce but, l'invention propose un module de commande selon la revendication indépendante 1. Le module de commande selon l'invention présente une ergonomie améliorée grâce à l'organe de commande et sa forme torique. En effet, l'utilisateur peut suivre la surface sensible avec son doigt de manière intuitive en suivant la forme torique au toucher. Cette forme torique lui fournit une indication sur la nature rotative du mouvement et lui permet de faire le lien avec une liste de défilement pour une fonction déterminée.

La forme torique est particulièrement appropriée pour des utilisateurs dont les doigts comportent des ongles relativement longs. En effet, le demandeur a constaté que la fiabilité d'un capteur tactile plan pouvait être remise en cause lorsque l'ongle du doigt d'un utilisateur est en contact avec la surface sensible du capteur pendant une manipulation. L'organe de commande selon l'invention est adapté à tout type d'utilisateur et tout type de doigt, quel que soit la longueur de ses ongles, et quel que soit le diamètre du doigt.

L'organe de commande selon l'invention permet d'utiliser une composante axiale du mouvement tactile, en plus de la composante circonférentielle, sans nécessiter une surface sensible de grande dimension.

Selon d'autres caractéristiques avantageuses de l'invention :
- la portion torique a une forme annulaire qui délimite un évidement central, la surface sensible étant agencée sur le bord intérieur de la forme annulaire ;
- l'évidement central débouche des deux côtés de l'axe principal ;
- la surface sensible est délimitée, par rapport à une surface inerte adjacente, par un rebord circonférentiel formant une surface de guidage circonférentiel ;
- la surface sensible de l'organe de commande est réalisée par moulage avec un boîtier ;
- l'organe de commande est agencé dans un angle du boîtier ;
- la surface sensible est munie d'un capteur capacitif ou résistif ;
- le dispositif de commande comporte un capteur d'ondes acoustiques qui est prévu pour détecter le mouvement tactile sur la surface sensible en fonction de la propagation des ondes acoustiques déclenchées par le mouvement tactile sur la surface sensible ;
- la surface sensible comporte au moins un secteur rétroéclairé ;
- la surface sensible comporte circonférentiellement une alternance de secteurs rétroéclairés et de secteurs non rétroéclairés ;
- l'allumage des secteurs rétroéclairés est commandé en fonction du mouvement tactile sur la surface sensible.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue de face qui représente schématiquement la face avant d'un module de commande équipé d'organes de commande conformes aux enseignements de l'invention ;
- la figure 2 est une vue de détail de la figure 1 qui représente un organe de commande ;
- la figure 3 est une vue en coupe axiale selon le plan 3-3 qui représente schématiquement l'organe de commande et le système de détection du toucher.

### DESCRIPTION DES MODES DE REALISATION PREFERES

Dans la suite de la description, des éléments similaires ou identiques pourront être désignés par les mêmes signes de référence.

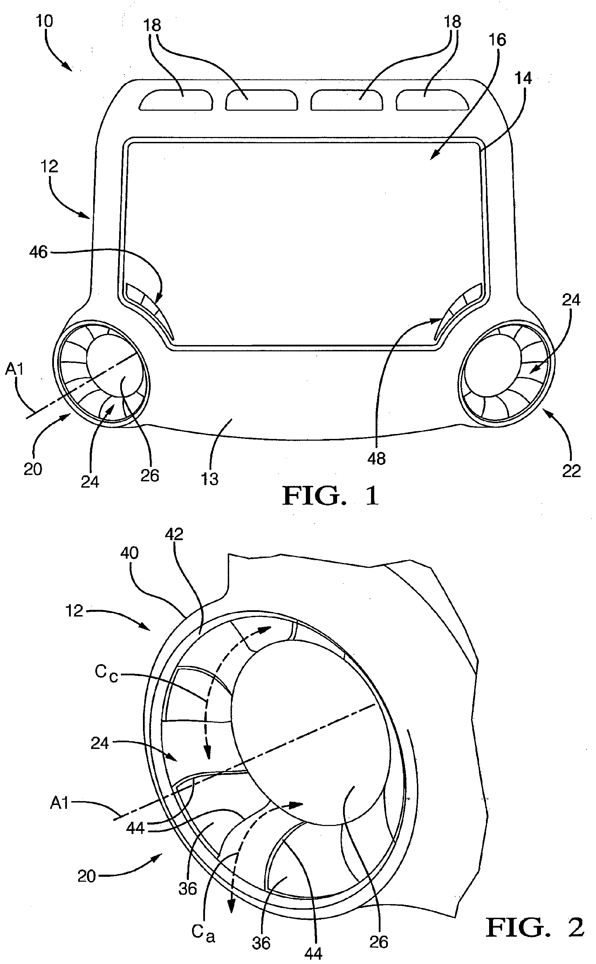

Sur la figure 1, on a représenté un module de commande 10 prévu pour être agencé dans l'habitacle d'un véhicule automobile (non représenté) en vue de commander différentes fonctions du véhicule telles que la climatisation, l'autoradio, le système de navigation, etc.

Selon le mode de réalisation représenté, le module de commande 10 comporte un boîtier 12 muni d'un encadrement 14 qui délimite le bord d'un écran d'affichage 16 et muni de commutateurs 18 agencés à la périphérie de l'écran d'affichage 16, sur la face avant 13 du boîtier 12, de manière à permettre de commander différentes fonctions du véhicule et de manière à déclencher l'affichage d'informations correspondantes sur l'écran d'affichage 16.

Les commutateurs 18 peuvent être constitués par des surfaces sensibles au toucher, ou surfaces tactiles, ou par des commutateurs à déclenchement mécanique.

Comme représenté sur la figure 1, et plus en détail sur la figure 2, le module de commande 10 est équipé ici de deux organes de commande 20, 22 conformes aux enseignements de l'invention, qui sont agencés dans chacun des angles inférieurs du boîtier 12. Chaque organe de commande 20, 22 comporte une surface sensible au toucher 24 formant une portion globalement torique convexe autour d'un axe principal A1. L'axe principal A1 s'étend ici dans une direction sensiblement orthogonale au plan général de la face avant 13 du boîtier 12, ou dans une direction légèrement inclinée par rapport à une direction orthogonale à ce plan général. A titre non limitatif, on oriente l'axe principal A1 de l'avant vers l'arrière en considérant la face avant 13 du boîtier 12 qui est munie de l'écran d'affichage 16.

La portion torique a ici une forme annulaire délimitant un évidement central 26 de sorte que la surface sensible 24 s'étend sur le bord intérieur de la forme annulaire.

Avantageusement, la surface sensible 24 est réalisée par moulage avec le boîtier 12, c'est-à-dire que chaque organe de commande 20, 22 est constitué ici par une extension du boîtier 12 globalement en forme d'anneau. La portion du boîtier 12 formant la surface sensible 24 a ici, selon une section axiale, un profil globalement en demi-cercle, la partie arrondie convexe externe étant orientée vers l'axe principal A1 et la paroi intérieure 27 étant sensiblement cylindrique.

Chaque organe de commande 20, 22 est prévu pour détecter un mouvement tactile sur la surface sensible 24. Plus particulièrement, il est prévu une unité électronique de commande 28 qui détecte dans le mouvement tactile sa composante dite circonférentielle Cc, autour de l'axe principal A1, et sa composante dite axiale Ca, globalement contenue dans un plan axial par rapport à l'axe principal A1, et qui produit un signal de commande élaboré fonction de ces deux composantes Cc, Ca.

Le mouvement tactile correspond au glissement du doigt d'un utilisateur sur la surface sensible au toucher 24. L'organe de commande 20, 22 selon l'invention permet de détecter un mouvement tactile essentiellement circonférentiel, lorsque le doigt parcourt la surface sensible 24 globalement selon une direction circonférentielle Cc, orientée dans le sens horaire ou antihoraire, et un mouvement tactile essentiellement axial, lorsque le doigt parcourt la surface sensible 24, ou glisse sur celle-ci, globalement selon une direction axiale Ca c'est-à-dire globalement suivant une direction contenue dans un plan passant par l'axe principal A1. Un mouvement tactile axial peut être dirigé vers l'arrière, le doigt pénétrant dans l'évidement 26 par l'avant de l'organe de commande 20, 22, et il peut être dirigé vers l'avant, le doigt glissant sur la surface sensible 24 en sortant de l'évidement 26 et en s'éloignant de la face avant 25 du boîtier 12.

Avantageusement, dans un mode de fonctionnement, la composante circonférentielle Cc du mouvement tactile contrôle le défilement d'une liste sur l'écran d'affichage 16 et la composante axiale Ca du mouvement tactile provoque la validation de la fonction associée dans la liste.

D'autres modes de fonctionnement peuvent être envisagés dans lesquels les composantes circonférentielle Cc et axiale Ca sont utilisées différemment. Par exemple, une fonction peut être contrôlée en fonction du rapport entre la composante circonférentielle Cc et la composante axiale Ca. Le mouvement tactile sur la surface sensible 24 peut contrôler la position d'un curseur sur l'écran d'affichage 16 en fonction des deux composantes Cc, Ca.

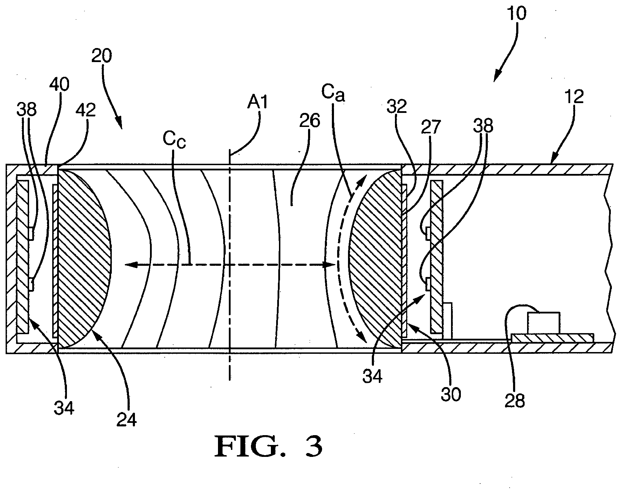

La surface sensible 24 de chaque organe de commande 20, 22 est équipée de moyens de détection du toucher 30 qui sont reliés à l'unité de commande 28 pour permettre le contrôle des fonctions affichées sur l'écran d'affichage 16. Selon un premier mode de réalisation, qui est illustré par la figure 3, les moyens de détection du toucher 30 comportent un film résistif ou capacitif 32 formant capteur tactile qui est prévu pour détecter le toucher en mesurant un changement de résistance ou de capacitance. Le film 32 est ici agencé sur la paroi intérieure 27 de la surface sensible 24.

Le film 32 est raccordé électriquement à l'unité de commande 28 qui est prévue pour traiter les informations transmises par le film 32 en vue de déterminer le type de mouvement tactile détecté sur la surface sensible 24 et en vue d'émettre un signal de commande correspondant vers l'écran d'affichage 16.

Selon un second mode de réalisation, le film 32 peut être remplacé par un capteur d'ondes acoustiques qui est prévu pour détecter le mouvement tactile et ses caractéristiques en fonction de la propagation des ondes acoustiques déclenchées par le toucher du doigt sur la surface sensible 24. Ce type de technologie de détection, à base de capteur piézoélectrique, est proposé par la société Sensitive Object et décrit dans plusieurs documents, notamment dans les documents EP1512116A2, EP2116921A1, EP2175348A1.

Avantageusement, chaque organe de commande 20, 22 est équipé d'un dispositif de rétroéclairage 34 qui est relié à l'unité de commande 28 et qui est prévu pour rétroéclairer des secteurs 36 de la surface sensible 24 répartis circonférentiellement sur le pourtour de la surface sensible 24. De préférence, l'unité de commande 28 contrôle le rétroéclairage des secteurs 36, notamment en terme d'intensité et de couleur, en fonction du signal de commande produit par la détection du toucher sur la surface sensible 24.

Le dispositif de rétroéclairage 34 comporte par exemple des diodes électroluminescentes 38 agencées dans le boîtier 12, à proximité de la paroi intérieure 27 de la surface sensible 24. Les secteurs 36 rétroéclairés sont par exemple réalisés dans un matériau translucide favorisant la diffusion de la lumière produite par le dispositif de rétroéclairage 34.

De préférence, la surface sensible 24 est délimitée, par rapport à une surface inerte 40 adjacente du boîtier 12, par un rebord circonférentiel 42 formant une surface de guidage circonférentiel facilitant le glissement du doigt suivant la direction circonférentielle. Le rebord circonférentiel 42 s'étend ici sur un secteur angulaire couvrant une grande partie de la circonférence de la surface sensible 24, le rebord circonférentiel 42 étant interrompu sur une portion voisine de l'angle adjacent de l'écran d'affichage 16.

Les secteurs 36 de la surface sensible 24 peuvent aussi être délimités par des bordures 44 de manière à fournir à l'utilisateur une sensation tactile lui permettant de mieux contrôler la vitesse et le positionnement de son doigt sur la surface sensible 24.

Avantageusement, dans un mode de fonctionnement illustré sur la figure 1, l'écran d'affichage 16 comporte des pictogrammes 46, 48 qui s'étendent en arc de cercle centrés sur l'axe principal A1 de l'organe de commande 20, 22 adjacent. Ces pictogrammes 46, 48 correspondent à l'affichage du statut de la fonction contrôlée par l'organe de commande 20, 22 associé. Ainsi, l'utilisateur identifie immédiatement le lien fonctionnel entre l'organe de commande 20, 22 et la fonction représentée par le pictogramme 46, 48 associé.

## Revendications

1. Module de commande (10) comportant un organe de commande (20, 22) fixe qui est pourvu d'une surface sensible au toucher (24) de manière à fournir un signal de commande représentatif de la position ou du mouvement d'un doigt sur la surface sensible (24), la surface sensible (24) de l'organe de commande (20, 22) comportant une portion globalement torique, autour d'un axe principal (A1), et le module de commande (10) comportant une unité de commande (28) qui est prévue pour détecter la composante dite axiale (Ca) et la composante dite circonférentielle (Cc) d'un mouvement tactile sur la surface sensible (24) de manière à produire un signal de commande élaboré qui est fonction de ces deux composantes (Ca, Cc), le Module de commande (10) comportant un écran d'affichage (16) dont au moins une fonction est contrôlée par l'organe de commande (20, 22), **caractérisé en ce que** la fonction comporte une liste dont le défilement est contrôlé par la composante circonférentielle (Cc) du mouvement tactile et dont la validation est contrôlée par la composante axiale (Ca) du mouvement tactile.

2. Module de commande (10) selon la revendication précédente, **caractérisé en ce que** la portion torique a une forme annulaire qui délimite un évidement central (26), la surface sensible (24) étant agencée sur le bord intérieur de la forme annulaire.

3. Module de commande (10) selon la revendication précédente, **caractérisé en ce que** l'évidement central (26) débouche des deux côtés de l'axe principal (A1).

4. Module de commande (10) selon l'une quelconque des revendications précédentes, **caractérisé en ce que** la surface sensible (24) est délimitée, par rapport à une surface inerte (40) adjacente, par un rebord circonférentiel (42) formant une surface de guidage circonférentiel.

5. Module de commande (10) selon l'une quelconque des revendications précédentes, comportant un boîtier (12), **caractérisé en ce que** la surface sensible (24) de l'organe de commande (20, 22) est réalisée par moulage avec le boîtier (12).

6. Module de commande (10) selon l'une quelconque des revendications précédentes, comportant un boîtier (12), **caractérisé en ce que** l'organe de commande (20, 22) est agencé dans un angle du boîtier (12).

7. Module de commande (10) selon l'une quelconque des revendications précédentes, **caractérisé en ce que** la surface sensible (24) est munie d'un capteur capacitif ou résistif (32).

8. Module de commande (10) selon l'une quelconque des revendications 1 à 6, **caractérisé en ce qu'**il comporte un capteur d'ondes acoustiques qui est prévu pour détecter le mouvement tactile sur la surface sensible (24) en fonction de la propagation des ondes acoustiques déclenchées par le mouvement tactile sur la surface sensible (24).

9. Module de commande (10) selon l'une quelconque des revendications précédentes, **caractérisé en ce que** la surface sensible (24) comporte au moins un secteur rétroéclairé (36).

10. Module de commande (10) selon la revendication précédente, **caractérisé en ce que** la surface sensible (24) comporte circonférentiellement une alternance de secteurs rétroéclairés (36) et de secteurs non rétroéclairés.

11. Module de commande (10) selon la revendication précédente, **caractérisé en ce que** l'allumage des secteurs rétroéclairés (36) est commandé en fonction du mouvement tactile sur la surface sensible (24).

## Patentansprüche

1. Steuermodul (10), enthaltend ein feststehendes Steuerorgan (20, 22), das mit einer berührungsempfindlichen Fläche (24) versehen ist, so dass es ein für die Position oder die Bewegung eines Fingers auf der berührungsempfindlichen Fläche (24) repräsentatives Steuersignal erzeugt,
wobei die berührungsempfindliche Fläche (24) des Steuerorgans (20, 22) einen insgesamt torischen Abschnitt um eine Hauptachse (A1) herum aufweist, wobei das Steuermodul (10) eine Steuereinheit (28) enthält, die zum Erfassen der sogenannten axialen Komponente (Ca) und der sogenannten umfänglichen Komponente (Cc) einer Berührungsbewegung auf der berührungsempfindlichen Fläche (24) vorgesehen ist, so dass ein abgeleitetes Steuersignal erzeugt wird, das Funktion dieser beiden Komponenten (Ca, Cc) ist, wobei das Steuermodul (10) einen Anzeigebildschirm (16) aufweist, von dem zumindest eine Funktion über das Steuerorgan (20, 22) gesteuert wird, **dadurch gekennzeichnet, dass** die Funktion eine Liste enthält, deren Ablaufen durch die umfängliche Komponente (Cc) der Berührungsbewegung gesteuert wird und deren Validierung über die axiale Komponente (Ca) der Berührungsbewegung gesteuert wird.

2. Steuermodul (10) nach dem vorangehenden Anspruch, **dadurch gekennzeichnet, dass** der torische Abschnitt eine Ringform hat, welche eine zentrale Ausnehmung (26) eingrenzt, wobei die berührungsempfindliche Fläche (24) am Innenrand der Ringform angeordnet ist.

3. Steuermodul (10) nach dem vorangehenden Anspruch, **dadurch gekennzeichnet, dass** die zentrale Ausnehmung (26) auf beiden Seiten der Hauptachse (A1) ausmündet.

4. Steuermodul (10) nach einem der vorangehenden Ansprüche, **dadurch gekennzeichnet, dass** die berührungsempfindliche Fläche (24) bezüglich einer benachbarten, trägen Fläche (40) von einer umfänglichen Randkante (42) eingegrenzt wird, die eine umfängliche Führungsfläche bildet.

5. Steuermodul (10) nach einem der vorangehenden Ansprüche mit einem Gehäuse (12), **dadurch gekennzeichnet, dass** die berührungsempfindliche Fläche (24) des Steuerorgans (20, 22) durch Formen mit den Gehäuse (12) hergestellt ist.

6. Steuermodul (10) nach einem der vorangehenden Ansprüche mit einem Gehäuse (12), **dadurch gekennzeichnet, dass** das Steuerorgan (20, 22) in einem Eckbereich des Gehäuses (12) angeordnet ist.

7. Steuermodul (10) nach einem der vorangehenden Ansprüche, **dadurch gekennzeichnet, dass** die berührungsempfindliche Fläche (24) mit einem kapazitiven oder resistiven Sensor (32) versehen ist.

8. Steuermodul (10) nach einem der vorangehenden Ansprüche 1 bis 6, **dadurch gekennzeichnet, dass** es einen Schallwellensensor enthält, der dazu vorgesehen ist, die Berührungsbewegung auf der berührungsempfindlichen Fläche (24) in Abhängigkeit von der Ausbreitung der durch die Berührungsbewegung auf der berührungsempfindlichen Fläche ausgelösten Schallwellen zu erfassen.

9. Steuermodul (10) nach einem der vorangehenden Ansprüche, **dadurch gekennzeichnet, dass** die berührungsempfindliche Fläche (24) zumindest einen hinterleuchteten Sektor (36) aufweist.

10. Steuermodul (10) nach dem vorangehenden Anspruch, **dadurch gekennzeichnet, dass** die berührungsempfindliche Fläche (24) umfänglich eine Wechselfolge von hinterleuchteten Sektoren (36) und nicht hinterleuchteten Sektoren aufweist.

11. Steuermodul (10) nach dem vorangehenden Anspruch, **dadurch gekennzeichnet, dass** das Einschalten der hinterleuchteten Sektoren (36) in Abhängigkeit von der Berührungsbewegung auf der berührungsempfindlichen Fläche (24) gesteuert wird.

## Claims

1. Control module (10) comprising a fixed control member (20, 22) which is provided with a touch-sensitive surface (24) so as to supply a control signal representative of the position or of the movement of a finger on the sensitive surface (24),
the sensitive surface (24) of the control member (20, 22) comprising an overall toric portion, around a main axis (A1), and the control module (10) comprising a control unit (28) which is provided to detect the so-called axial component (Ca) and the so-called circumferential component (Cc) of a tactile movement on the sensitive surface (24) so as to produce an elaborate control signal which is the function of these two components (Ca, Cc), the control module (10) comprising a display screen (16) of which at least one function is controlled by the control member (20, 22), **characterized in that** the function comprises a list in which the scrolling is controlled by the circumferential component (Cc) of the tactile movement and in which the confirmation is controlled by the axial component (Ca) of the tactile movement.

2. Control module (10) according to the preceding claim, **characterized in that** the toric portion has an annular form which delimits a central void (26), the sensitive surface (24) being arranged on the inner edge of the annular form.

3. Control module (10) according to the preceding claim, **characterized in that** the central void (26) emerges on both sides of the main axis (A1).

4. Control module (10) according to any one of the preceding claims, **characterized in that** the sensitive surface (24) is delimited, relative to an adjacent inert surface (40), by a circumferential shoulder (42) forming a circumferential guiding surface.

5. Control module (10) according to any one of the preceding claims, comprising a casing (12), **characterized in that** the sensitive surface (24) of the control member (20, 22) is produced by moulding with the casing (12).

6. Control module (10) according to any one of the preceding claims, comprising a casing (12), **characterized in that** the control member (20, 22) is arranged in a corner of the casing (12).

7. Control module (10) according to any one of the preceding claims, **characterized in that** the sensitive surface (24) is provided with a capacitive or resistive sensor (32).

8. Control module (10) according to any one of Claims 1 to 6, **characterized in that** it comprises an acoustic wave sensor which is provided to detect the tactile movement on the sensitive surface (24) as a function of the propagation of the acoustic waves triggered by the tactile movement on the sensitive surface (24).

9. Control module (10) according to any one of the preceding claims, **characterized in that** the sensitive surface (24) comprises at least one backlit segment (36).

10. Control module (10) according to the preceding claim, **characterized in that** the sensitive surface (24) circumferentially comprises an alternation of backlit segments (36) and of non-backlit segments.

11. Control module (10) according to the preceding claim, **characterized in that** the lighting of the backlit segments (36) is controlled as a function of the tactile movement on the sensitive surface (24).
